# EUROPEAN PATENT APPLICATION

(11) **EP 1 568 539 A1**
(43) Date of publication of application: **31.08.2005**
(21) Application number: 05003331.5
(22) Date of filing: 16.02.2005
(51) Int. Cl.: B60N 2/66, A47C 7/46, G05G 5/12, F16D 13/12, G05G 23/02

(54) **Actuation mechanism for bowden cables**

(30) Priority: 26.02.2004 DE 102004009331
(71) Applicant: FICO CABLES LDA, 4471 Maia (PT)
(72) Inventor: Sobral Martins, Carla, 4435-773 Baguim Do Monte (PT)
(74) Representative: Hess, Peter K. G.

(57) **Abstract**

The present invention relates to an actuating mechanism 1 for the actuation of at least one Bowden cable 90, which comprises a stationary housing 70, a rotatably mounted spool 40 for the winding of at least one inner cable 92 of the Bowden cable 90, a first spring clutch 60, which engages in its blocked condition with a cylindrical inner surface 76 of the housing 70 and a second spring clutch 50, which engages in its blocked condition with a cylindrical outer surface 78 of the housing 70, wherein the first 60 and the second spring clutch 50 prevent from an undesired rotation of the spool 40 in both rotational directions.

## Description

### 1. Field of the invention

This invention relates to an actuating mechanism for the actuation of at least one Bowden cable. Preferably, theses actuation mechanisms are used in the automotive field and herein for example for the actuation of a lumbar support in a motor vehicle seat.

### 2. Prior art

In the automotive engineering but also in other industries, motions are often transmitted by so-called Bowden cables. This is particularly the case, if forces are introduced at a remote position and needed at another position. Examples for this are the remote actuation of outer mirrors, the heating or the clutch of a motor vehicle.

For the introduction of a force onto a Bowden cable, an actuation mechanism is needed. This can be an electrical actuation mechanism wherein by means of an electric motor the inner cables of a Bowden cable are tightened or released with respect of the sheath of the Bowden cable via an appropriate mechanism. Besides that there are manual actuating mechanisms wherein the user actuates a lever or a rotating knob so that the cables of the Bowden cable are tightened or released.

A plurality of solutions already exists for this in the prior art. So, for example a manually actuatable actuation mechanism is known from the US patent number 6,334,651 B1 which comprises a one-way clutch which blocks in one direction. The actuating mechanism is provided with a lever or a rotating knob and the one-way clutch ensures that the pulling force onto the cable of the Bowden cable is maintained if the lever or the rotating knob is released. The one-way clutch is realized by a roll clutch.

In the US patent number 5,794,479 an actuating mechanism for the backrest of a vehicle seat is described which comprises an elastic element, which returns the lever after the actuation to a rest position. The actuating mechanism is further provided with a clutch, which clutches in during an actuation of the hand lever and rotates the element, which is connected to the cable of the Bowden cable. After the actuation, the hand lever is again returned to its rest position, wherein the cable of the Bowden cable remains tightened.

From the US patent number 5,518,294 an actuating mechanism for the actuation of a lumbar support in a vehicle seat is again known. The shown actuating mechanism comprises a drum, onto which the inner cable of the Bowden cable can be wound. Further, it comprises a fixed housing into which the drum is rotatably mounted and a second housing, which can be rotated by a hand lever. The rotation of the hand lever forces a rotation of the second housing, wherein according to the rotation direction one of two spring clutches are actuated which transmit the rotation of the second housing to a spool. A back rotation of the spool is prevented by a third spring clutch, which is provided as a one-way clutch. For a back rotation of the spool, a force has to be applied via the hand lever, which is higher than the holding force of the one-way clutch.

Although already a plurality of possibilities for such actuation mechanisms are known, there is, however, a need for further improvements. So it is one problem of the present invention to provide an actuation mechanism which is simple in construction, possibly comprises less components and which can cost-efficiently be manufactured. Further, this actuating mechanism should possibly be universally usable, i.e. a tightening of the cable of a Bowden cable should be possible with a movement of the lever or the rotating knob in both directions. On the one hand this requires, that the components of the actuating mechanism allow an assembly of the Bowden cable for both actuating directions and on the other hand this requires that the actuating mechanism securely blocks in both directions.

A further problem of this invention is to provide an actuating mechanism which is particularly robust and maintenance-free due to its construction. Further, it is desirable that its assembly can be done possibly easy.

### 3. Summary of the invention

An actuating mechanism according to the invention for the actuation of at least one Bowden cable comprises a stationary housing, a rotatably mounted spool for the winding of at least one inner cable of the Bowden cable, a first spring clutch, which engages with a cylindrical inner surface of the housing in its blocked condition and a second spring clutch which engages with a cylindrical outer surface of the housing in its blocked condition, wherein the first and the second spring clutch prevent from an undesired rotation of the spool in both rotational directions.

The actuating mechanism according to the invention is thereby blocked in both rotational directions if it is not actuated. Thereby, on the one hand as well a pressure as also a pulling force can be transmitted via the cable of the Bowden cable and on the other hand the actuating mechanism can perform an actuation in both rotational directions. Further, the second spring clutch supports the first spring clutch during its blocking action by blocking in the direction of the comparable higher pulling force.

In a first preferred embodiment of the actuating mechanism, the second spring clutch additionally creates a rotational biasing force, additional to its blocking action, to prevent a mechanical free-play in the actuating mechanism. In this case, the manual actuation motions are transmitted directly to the cable of the Bowden cable. An undesired free-play between the hand lever and the spool and therefore of the cables of the Bowden cable is eliminated.

In a further preferred embodiment, the first spring clutch is biased against the inner surface of the housing. The outer side of the first spring clutch thereby contains in its rest condition the inner surface of the housing and can only be difficulty or not at all be rotated due to the frictional effect. The first spring clutch is in its rest condition, that means unactuated, in its blocking condition.

In a further preferred embodiment, the second spring clutch is biased against the outer surface of the housing. The inner side of the second spring clutch contacts in its rest position the outer surface of the housing and can only be difficultly or not at all rotated due to the frictional effect. The second spring clutch is in its rest condition, that means unactuated, in its blocking condition.

Preferably, the actuating mechanism further comprises a shaft, which is rotatably supported in the housing, which can actuate either a first or a second end of the first spring clutch, to contract the first spring clutch and to release the blocking of the first spring clutch with the housing.

Preferably the shaft can directly or indirectly actuate either a first or a second end of the second spring clutch, to extend the second spring clutch and to release the blocking of the second spring clutch with the housing.

Preferably, the shaft comprises at one end a shaft connection, wherein an external rotational motion can be introduced via this shaft connection, to drive the actuating mechanism. The shaft connection transmits a rotational motion of a control element to the shaft. The control element may for example be a hand lever or a rotating knob, but there are also motoric-driven control elements thinkable which can drive the shaft.

Preferably, the spool further comprises an eccentric projection, which projects in axial direction from the spool in the direction of the shaft. Via this axial projection, the spool is engaged and rotated by the shaft. Preferably, the eccentric projection is formed by a sprocket plate, which is additionally mounted at the spool. This sprocket plate can be made from another material as the one of the spool. For example the spool can be made from a plastic material and the sprocket plate, which is subjected to higher loads, could be made of a metal.

Preferably, the shaft comprises a first actuation face to engage the eccentric projection during a rotation of the shaft in tightening direction T and to transmit a rotational motion in tightening direction T to the spool. Further, the shaft can preferably comprise a second actuation face to engage the eccentric projection during a rotation of the shaft in release direction R and to transmit a rotational motion in release direction R to the spool.

Preferably, the first end of the second spring clutch is connected to the eccentric projection and the second end of the second spring clutch engages the second actuation face of the shaft, to apply a rotational biasing force between the eccentric projection and the shaft. Thereby, a free play between spool and shaft is prevented.

In a further preferred embodiment, the housing comprises two differently arranged connection openings which each can receive the outer sheath of the at least one Bowden cable, to arbitrarily choose the tightening direction of the actuating mechanism. Thereby, it is possible to use the same actuating mechanism for example as well as for the actuation from the left side of a backrest of a seat as well as from the right side of a backrest of a seat.

Preferably the second spring clutch can be inserted in two different orientations into the actuating mechanism to arbitrarily choose the tightening direction of the actuating mechanism.

### 4. Short description of the drawings

In the following, the preferred embodiments of the present invention are described with reference to the drawings. Therein shows:
- Fig. 1: the actuating mechanism according to the invention in a three-dimensional view in assembled condition;
- Fig. 2: the actuating mechanism according to the invention shown in a three-dimensional explosional view;
- Fig. 3: the inner components of the actuating mechanism according to the invention shown in a three-dimensional view, wherein the housing is removed;
- Fig. 4: an elevational view onto the two spring clutches of the actuating mechanism according to the invention;
- Fig. 5: a sectional view through the actuating mechanism according to the invention in a longitudinal sectional view through the center line;
- Fig. 6: an axial elevational view onto the actuating mechanism according to the invention during an actuation in tightening direction T, wherein the housing is removed;
- Fig. 7: an axial elevational view onto the actuating mechanism according to the invention shown during an actuation in release direction R, wherein the housing was removed;
- Fig. 8: an embodiment of a housing according to the invention in a three-dimensional view, which allows a double-sided mounting of the actuating mechanism.

### 5. Detailed description of the preferred embodiments

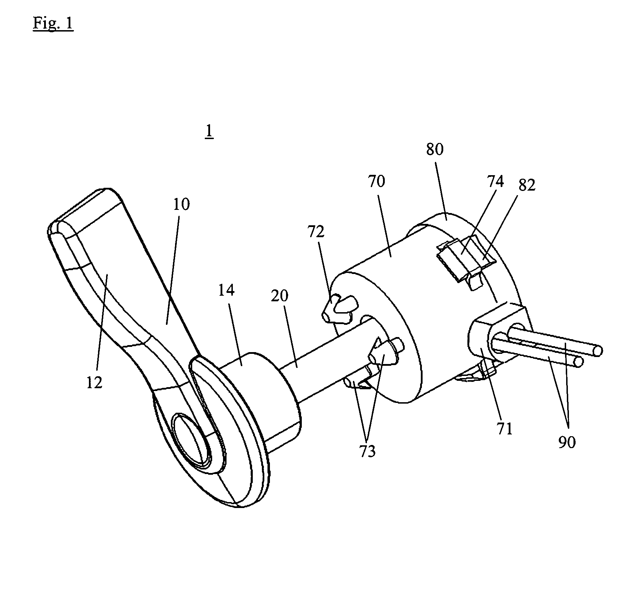

In the following, the preferred embodiments of the present invention are shown and discussed in detail by means of figs. 1 to 8.

The actuating mechanism which is shown in fig. 1 is preferably used for the actuation of a lumbar support (not shown) of a vehicle seat. The actuating mechanism 1 is provided with a lever 10, which is manually actuated by the passenger of the vehicle to adjust the lumbar support. The actuating mechanism 1 is used to transform the rotational motions which are applied by the passenger into translational motions which are transmitted to the lumbar support via two Bowden cables 90. The actuating mechanism 1 can of course also be used for the actuation of other elements, for example the heating, the head rest, the mirrors, or the like.

Fig. 1 shows an actuating mechanism 1 in assembled condition. The actuating mechanism 1 is manually actuated via a lever 10. The lever 10 comprises a handle 12 and an essentially cylindrical receptacle 14. Instead of lever 10, also a rotatable knob or a similar actuator can be provided for manual actuation. Further it is conceivable that the actuating mechanism 1 is driven electro-motoric (not shown).

The lever 10 is rotatably connected to the shaft 20. For this, the shaft 20 comprises at one end a shaft connection 28, which positively mates with the inner side of the receptacle 14.

The shaft 20 transmits a rotational motion of the lever 10 to the inner elements of the actuating mechanism 1. These inner elements of the actuating mechanism 1 are enclosed by a housing 70, which is closed by a cover 80 at the front side which opposites the shaft 20. Preferably the cover 80 is connected by means of unitarily formed clips 82, which engage lugs 74 at the housing 70. Thereby an easy possibility for the assembly results, wherein no further tools are needed. As shown in fig. 1, the housing 70 comprises snap elements 72 at the front side which is directed to the lever 10, by means of which the complete actuating mechanism 1 can be fixed at the metal frame of a vehicle seat (not shown). The mounting is done by a simple insertion of the actuating mechanism 1 into the metal frame, wherein the snap elements 72 latch within holes of the metal frame (not shown).

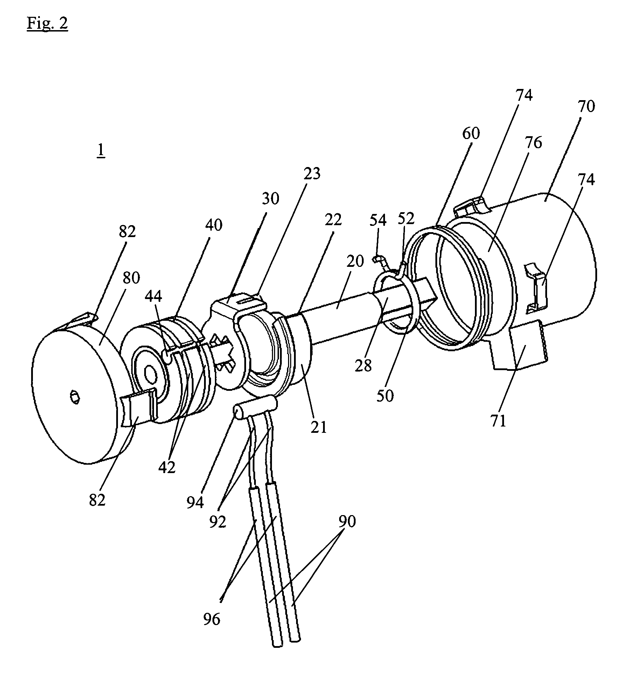

In fig. 2 the inner elements of an embodiment of the actuating mechanism 1 according to the invention are shown. Fig. 2 shows an essentially cylindrical housing 70, which comprises an opening for the passage of the shaft 20 at one front side. The other front side of the hollow cylindrical housing 70 is completely open. At the outer side of the housing 70, the already discussed lugs 74 are formed, in which the clips 82 of the cover 80 latch after the assembly thereof. Fig. 2 further shows an essentially rotational symmetric shaft 20 which comprises at one end a shaft connection 28, which is provided in this embodiment as a squared connection. At the other side of the shaft 20 an essentially rotational symmetric engaging body 28 is provided, wherein a segment of a circle is cut out, to provide a first actuation face 22 and a second actuation face 23. The function of the engaging body 21 is disclosed in detail below.

Further, fig. 2 shows an essentially cylindrical spool 40 which comprises two radially revolving cable slots 42 for receiving the inner cables 92 of the Bowden cable 90 and a receptacle hole 44 for receiving the cable ends 94 of the cables 92 of the Bowden cable 90. The spool 40 is used to wind or to unwind the cables 92 of the Bowden cable 90, so that the Bowden cable 90 is tightened or released. The spool 40 is rotational fixed with a sprocket plate 30, which comprises an axially angled upper portion, which forms an eccentrical projection and which projects in axial direction from the spool 40 in direction of the shaft 20. The spool 40 is engaged and rotated via the sprocket plate 30 by the engaging body 21 of shaft 20.

Fig. 2 further shows a first spring clutch 60 which prevents an undesired rotation of the spool 40. Further a second spring clutch 50 is provided which supports the function of the spring clutch 60 and simultaneously acts for a free-play free function of the actuating mechanism 1.

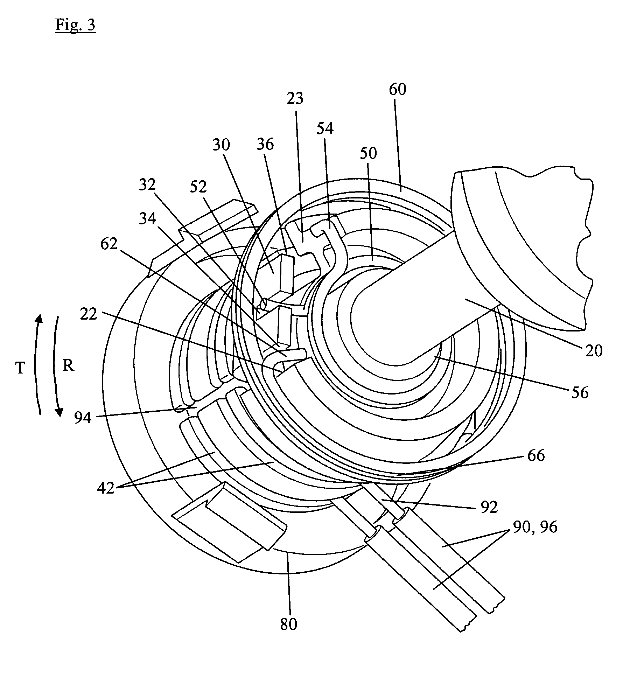

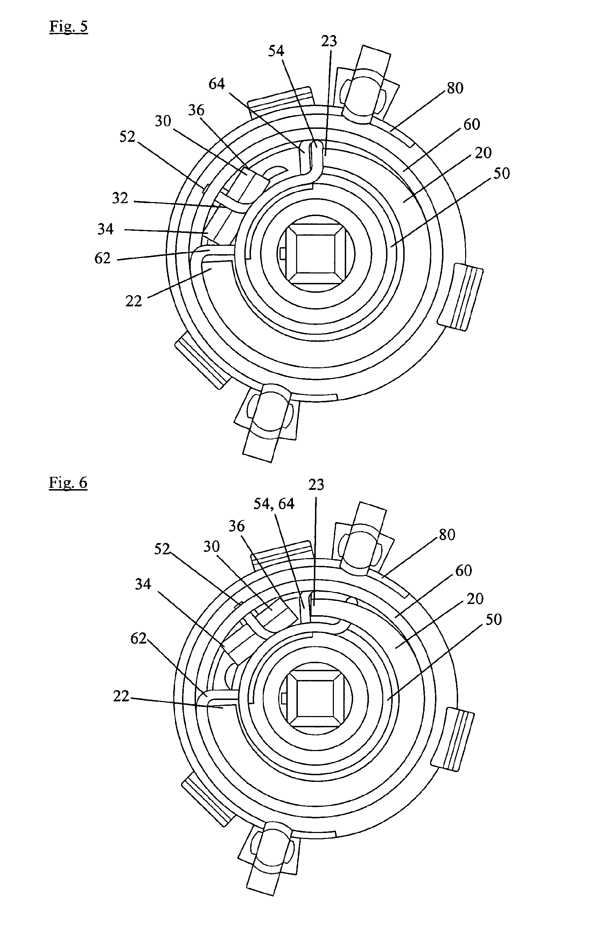

The arrangement of the separate inner components of the actuating mechanism 1 is shown in fig. 3. The housing 70 was removed for clarification. Fig. 3 shows that the cable ends 94 are anchored in the receptacle hole 44 of spool 40. The cables 92 of the Bowden cables 90 then run in the annular cable slots 42 and can be wound or unwound within them. The cable sheaths 96 of the Bowden cables 90 rest against the housing 70. The spool 40 is rotatably arranged within the housing 70, wherein it is axially rotatably guided by an axial pin 84 at the housing cover 80, which is shown in fig. 5. To this end, the spool 40 comprises an axial hole 46 wherein the axial pin 84 of the cover 80 engages and thereby provides a friction bearing.

At the other side of the spool 40, a sprocket plate 30 is rotatably fixed mounted. The sprocket plate 30 forms an eccentric projection which axially projects in direction of shaft 20. The sprocket plate 30 in general comprises an L-shaped section. Its eccentric projection further comprises a central recess 32 and lateral actuation faces 34 and 36 which actuate the spring clutches 50, 60.

In general, an actuation of the spool 40 is done by engaging and moving the sprocket plate 30 at its respective actuation faces 34 and 36 by the engaging body 21 of shaft 20. If the cables 92 of Bowden cables 90 should be tightened in the embodiment of fig. 3, the spool 40 must move in tightening direction T.

This is in general done by engaging the sprocket plate 30 by the engaging body 21 of shaft 20, if shaft 20 is rotated by the user by means of lever 10. In the case of an actuation in the tightening direction T also the shaft 20 has to be rotated in tightening direction T. Doing so, the first actuation face 22 contacts the first engaging face 34 of the sprocket plate 30. During a further rotation of the shaft 20 in tightening direction T, the shaft 20, the sprocket plate 30 and the spool 40 rotate together. Thereby, the cables 92 of Bowden cables 90 are wound onto spool 40.

If the shaft 20 is rotated in releasing direction R, the second actuating face 23 contacts the second engaging face 36 of sprocket plate 30 and at a further rotation of shaft 20 in releasing direction R, shaft 20, the sprocket plate 30 and the spool 40 rotate together in releasing direction R. Thereby, the cables 92 of Bowden cables 90 are unwound from spool 40.

During the above consideration at first the function of the second spring clutch 50 was not considered. As shown in fig. 3, the second spring clutch 50 is arranged axially onto the shaft 20 at the level of its engaging body 21. The first spring end 52 of the second spring clutch 50 is arranged within the recess 32 of the sprocket plate 30 and the second spring end 54 of the second spring clutch 50 rests against the second actuation face 23 of shaft 20. Thereby it is achieved that the first engaging face 34 of sprocket plate 30 is biased against the first actuation face 22 of shaft 20. If now again shaft 20 is rotated in tightening direction T, there is no free-play between the first engaging face 34 and the first actuation face 22, so that spool 40 directly rotates together with shaft 20 in tightening direction T.

During a rotation of shaft 20 in releasing direction R at first the second spring end 54 of spring clutch 50 is engaged by the second actuation face 23 of shaft 20 and spring 50 is extended against its spring force. Thereby, its first spring end 52 pushes against the sprocket plate 30 which already may lead to a rotation of spool 40. At which amount of pressure the rotation of spool 40 starts depends on the opposing force, which is transmitted from the Bowden cable 90 onto spool 40 and from the spring constant of the spring clutch 50. At a very high opposing force of the Bowden cables 90 onto spool 40, the second spring clutch 50 is biased to that extent until the second actuating face 23 of shaft 20 contacts the second engaging face 36 of sprocket plate 30. During a further rotation in releasing direction R, the sprocket plate 30 is taken along by the shaft 20. In general, tear forces are transmitted via the cables 92 of Bowden cables 90 so that a rotation in releasing direction R of spool 40 already starts until the spring clutch 50 is rotated by engaging body 21.

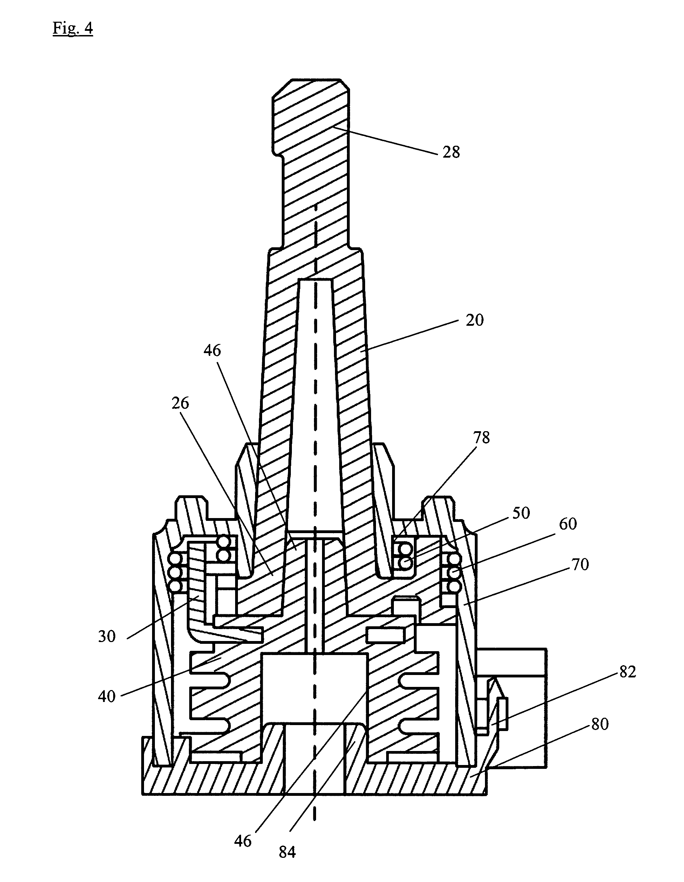

In the following, the function of the first spring clutch 60 and the second spring clutch 50 is discussed, which are separately shown in fig. 4. As already discussed, the second spring clutch 50 at first acts for biasing the sprocket plate 30 against the engaging body 21 without free-play. However, the spring clutch 50 also fulfils the task to prevent an undesired rotation of spool 40 in release direction R. As best shown in fig. 3 and fig. 5, the spring clutch 50 engages in its blocked condition a cylindrical outer face 78 of housing 70 with its inner face 56. The cylindrical outer face 78 of housing 70 is located within the housing 70 and it is like the same stationary with respect to the rotating inner elements of actuating mechanism 1. Preferably, the second spring clutch 50 is biased against the outer surface 78 of housing 70. Thereby, the second spring clutch 50 cannot rotate onto the outer surface 78 in its unactuated condition. That means, it is in its blocking condition. The blocking of spring clutch 50 can be released by pushing the first spring end 52 in tightening direction T or the second spring end 54 in releasing direction R. Thereby, the diameter of spring clutch 50 increases, so that it can glide over the cylindrical outer face 78 of housing 70. If the first spring end 52 is pushed in releasing direction R or the second spring end 54 in tightening direction T, the diameter of spring clutch 50 decreases and the blocking action is increased.

In the arrangement shown in fig. 3, this leads thereto, that a pulling force onto the cables 92 of Bowden cable 90 transmits a rotational force in releasing direction R onto spool 40 and thereby also onto the sprocket plate 30. The sprocket plate 30 transmits this force in direction R via the recess 32 onto the first spring end 52 of spring clutch 50 so that this blocks with housing 70. The spring clutch 50 in this case prevents an undesired releasing of the tension on the cables 92 of Bowden cables 90.

The first spring clutch 60 acts also for the preventing of an undesired rotation of spool 40. An outer face 66 of spring clutch 60 contacts a cylindrical inner face 76 of housing 70. The first spring clutch 60 is preferably biased against the cylindrical inner face 76 of housing 70. In this blocking condition, the spring clutch 60 cannot be rotated within housing 70. To release this blocking, the spring clutch 60 comprises a first spring end 62 and a second spring end 64. If the first spring end 62 is pushed in tightening direction T or the second spring end 64 is pushed in releasing direction R, the diameter of spring clutch 60 decreases and it can be rotated within housing 70 onto the cylindrical inner face 74. If shaft 20 is rotated in tightening direction T, the first actuating face 22 engages the first spring end 62 of first spring clutch 60, wherein its diameter decreases and it can glide within housing 70. If shaft 20 is rotated in releasing direction R, the second actuating face 23 engages the second spring end 64, whereby again the diameter of spring clutch 60 is decreased and it can be rotated within the housing 70. Thereby, the blocking action of the first spring clutch 60 is released during an actuation of the actuating mechanism 1 by the user via a hand lever 10 or a rotating knob. However, if the cables 92 of Bowden cables 90 tear the spool 40 in releasing direction R, the first engaging face 34 of sprocket plate 30 pushes against the first spring end 62 of first spring clutch 60, so that its diameter increases and it blocks with housing 70. The same results, if a pressure is transmitted to spool 40 via the cables 92 of the Bowden cables 90, so that spool 40 is rotated in tightening direction T. Then, the second engaging face 36 pushes against the second spring end 64 of the first spring clutch 60. The first spring clutch 60 will again increase its diameter and block against the inner surface 74 of housing 70. Thereby, it is however to be noted, that the pretensioning of the first spring clutch 60 must be greater than the force which is transmitted by the spring clutch 50 onto shaft 20 due to the rotation of spool 40. To ensure this, the spring constant of the second spring clutch 50 should be smaller than the spring constant of the first spring clutch 60.

As shown, the arrangement of the actuating mechanism 1 according to the invention ensures a reliable blocking of the cables 92 of the Bowden cables 90 in both rotational directions with respect to an undesired rotation. Therefore, the actuating mechanism 1 is preferably designed so that very high pulling loads onto the Bowden cables 90 are securely held by the actuating mechanism 1.

A particular advantage of the actuating mechanism 1 lies therein, that it is designed as well as for a left-sided as also for a right-sided mounting, for example at the left or the right side of a backrest of a vehicle seat. That means, that the tightening or releasing direction of the actuating mechanism 1 can easily be changed. In the embodiment shown in fig. 3, the cables 92 of Bowden cables 90 are guided to the front from the drawing level in the slots 42 of spool 40. Thereby, the tightening direction T is that direction wherein a tension can be applied to the cables 92. In fig. 3 this is shown by the arrow T, which is directed to the top and which should symbolize a clockwise rotation of the spool 40.

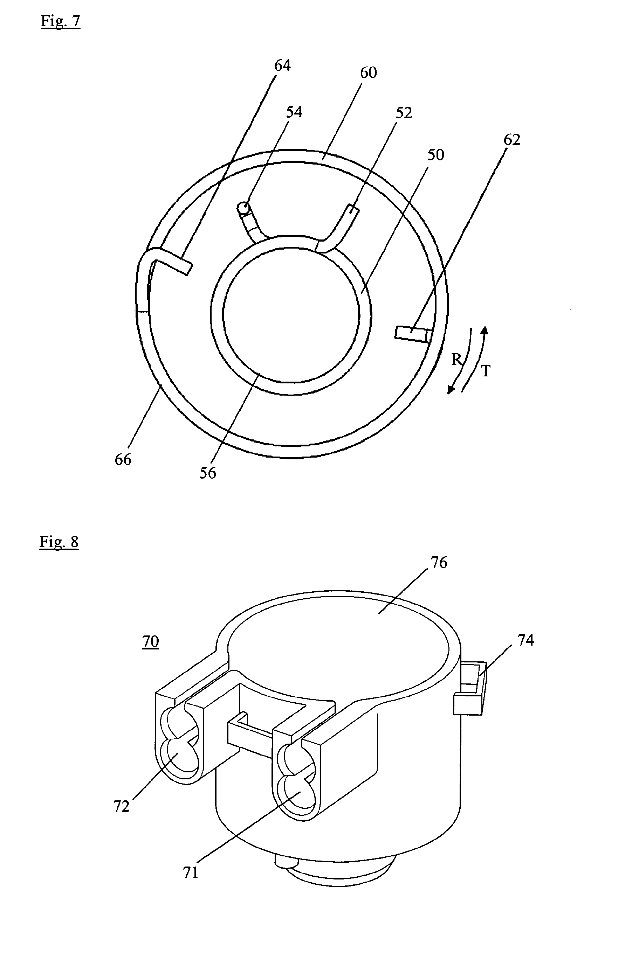

If now the cables 92 are guided to the other side within the slots 42, that means to the back, a tension can be applied to the cables 92 if the spool 40 is rotated in direction R. To this end, spool 40 is symmetrically constructed so that cables 92 can also be guided around the other side. The Bowden cables 90 exit the housing 70 in a tangential manner. To reverse the rotational directions, the housing 70 must comprise two different connection openings 71, 72, like they are shown in fig. 8.

The first connection opening 71 of housing 70 is designed in that way, that the sheath 96 of Bowden cables 90 can be received for the case shown in fig. 3. If the rotational direction of actuating mechanism 1 is reversed, the cables 92 on spool 40 run in the opposite direction and the cable sheath 96 is received by the second connecting opening 72 of housing 70.

To provide an optimal blocking of spool 40 also in this case with respect to an undesired releasing, the second spring clutch 50 is positioned onto shaft 20, so that its second spring end 54 shows in direction of the first actuation face 22. That means that the second spring clutch 50 is positioned in a mirrored fashion compared to the arrangement shown in fig. 3. The first spring end 52 of spring clutch 50 is again arranged within the recess 32 of sprocket plate 30. By this means, the actuating mechanism 1 can be used for arbitrary actuation directions without constructive changes. It is not needed to produce to different embodiments. The production costs are significantly lowered and it allows a universal possibility of use of the actuating mechanism 1.

Although in the embodiment shown, the actuation of two Bowden cables 90 is respectively disclosed, it is naturally thinkable to actuate only one Bowden cable or more than two Bowden cables simultaneously. By the particular construction of the actuation mechanism 1, it is even possible to wind the Bowden cables in different directions to the spool 40 so that respectively one Bowden cable is pulled, while the other transmits a pressure. The cables of the Bowden cable then each perform opposite movements.

As shown in fig. 5, the single components of the actuating mechanism 1 are axially rotatable nested into each other. Thereby, the requirement of providing an additional rotational axis does not apply. As already described, spool 40 is guided by a pin 84 in housing cover 80. In the same manner, shaft 20 is guided by a pin 46 of spool 40, which engages into a hole 26 of shaft 20. Further, shaft 20 is supported within a support hole within housing 70. An assembly of the actuating mechanism 1 can therefore very easily be done by a simple nesting of the single components. This arrangement is fixed by latching the housing cover 80 at the housing 70.

Further, the actuating mechanism 1 is very robust and therefore constructed for low maintenance due to this arrangement of the single components. The shaft 20, the spool 40, the housing 70 and the housing cover 80 are preferably produced of a plastic material. Preferably glass-fiber reinforced plastic material is used. The sprocket plate 30 consists preferably also of a plastic material or a sheet metal. The first spring clutch 60 and the second spring clutch 50 are preferably produced of a spring steel.

### List of reference signs

- 1: actuating mechanism
- 10: lever
- 12: handle
- 14: receptacle
- 20: shaft
- 21: engaging body
- 22: first actuation face
- 23: second actuation face
- 26: axial hole
- 28: shaft connection
- 30: sprocket plate
- 32: recess
- 34: first engagement face
- 36: second engagement face
- 40: spool
- 42: cable slot
- 44: receptacle hole
- 46: axial hole
- 48: axial pin
- 50: second spring clutch
- 52: first spring end
- 54: second spring end
- 56: inner face
- 60: first spring clutch
- 62: first spring end
- 64: second spring end
- 66: outer face
- 70: housing
- 71: first connection opening
- 72: second connection opening
- 73: snap element
- 74: lugs
- 76: cylindrical inner face
- 78: cylindrical outer face
- 80: housing cover
- 82: clips
- 84: axial pin
- 90: Bowden cables
- 92: cable
- 94: cable end
- 96: cable sheath

## Claims

1. Actuating mechanism (1), for the actuation of at least one Bowden cable (90) comprising:
a. a stationary housing (70);
b. a rotatably mounted spool (40), for the winding of at least one inner cable (92) of the Bowden cable (90);
c. a first spring clutch (60), which engages a cylindrical inner surface (76) of the housing (70) during its blocking condition; and
d. a second spring clutch (50), which engages a cylindrical outer surface (78) of the housing (70) during its blocking condition; wherein
e. the first (60) and second spring clutch (50) prevent from an undesired rotation of the spool (40) in both rotational directions.

2. Actuating mechanism according claim 1, wherein the second spring clutch (50) additionally to its blocking action creates a rotational biasing force, to prevent from a mechanical free-play in the actuating mechanism (1).

3. Actuating mechanism according to one of the claims 1 or 2, wherein the first spring clutch (60) is biased against the inner surface (76) of the housing (70).

4. Actuating mechanism according to one of the claims 1 - 3, wherein the second spring clutch (50) is biased against the outer surface (78) of the housing (70).

5. Actuating mechanism according to one of the claims 1 - 4, further comprising a shaft (20), which is rotatably supported in the housing (70), which can actuate either a first (62) or a second end (64) of the first spring clutch (60), to contract the first spring clutch (60) and to release the blocking of the first spring clutch (60) with the housing (70).

6. Actuating mechanism according to one of the claims 1 - 5, wherein the shaft (20) can directly or indirectly engage the first (52) or the second end (54) of the second spring clutch (50), to extend the second spring clutch (50) and to release the blocking of the second spring clutch (50) with the housing (70).

7. Actuating mechanism according to one of the claims 5 or 6, wherein the shaft (20) comprises at one end a shaft connection (28), wherein an external rotational motion can be introduced via this shaft connection (28), to drive the actuating mechanism (1).

8. Actuating mechanism according to one of the claims 5 - 7, wherein the spool (40) further comprises an eccentric projection (30), which projects in axial direction from the spool (40) in the direction of the shaft (20).

9. Actuating mechanism according to claim 8, wherein the eccentric projection (30) is formed by a sprocket plate (30), which is additionally mounted at the spool (40).

10. Actuating mechanism according to one of the claims 8 or 9, wherein the shaft (20) comprises a first actuation face (22) to engage the eccentric projection (30) during a rotation of the shaft (20) in tightening direction (T) and to transmit a rotational motion in tightening direction (T) to the spool (40); and wherein
the shaft (20) comprises a second actuation face (23) to engage the eccentric projection (30) during a rotation of the shaft in releasing direction (R) and to transmit a rotational motion in releasing direction (R) to the spool (40).

11. Actuating mechanism according to claim 10, wherein the first end (52) of the second spring clutch (50) is connected to the eccentric projection (30) and the second end (54) of the second spring clutch (50) engages the second actuation face (23) of the shaft (20), to apply a rotational biasing force between the eccentric projection (30) and the second actuation face (23) of the shaft (20).

12. Actuating mechanism according to one of the claims 1 - 11, wherein the housing (70) comprises two differently arranged connection openings (71, 72), which each can receive the outer sheath (96) of the at least one Bowden cable (90), to arbitrarily choose the tightening direction of the actuating mechanism (1).

13. Actuating mechanism according to one of the claims 1 - 12, wherein the second spring clutch (50) can be inserted in two different orientations into the actuating mechanism (1), to arbitrarily choose the tightening direction of the actuating mechanism (1).
